Europäisches Patentamt

European Patent Office

Office européen des brevets

(11) Veröffentlichungsnummer: **0 291 548**

**A1**

## EUROPÄISCHE PATENTANMELDUNG

(21) Anmeldenummer: 87107257.5

(22) Anmeldetag: 19.05.87

(51) Int. Cl.4: **F04D 29/04 , H01S 3/03**

(43) Veröffentlichungstag der Anmeldung:
23.11.88 Patentblatt 88/47

(84) Benannte Vertragsstaaten:
AT DE FR GB IT

(71) Anmelder: **Fortuna-Werke Maschinenfabrik GmbH**
**Pragstrasse 140**
**D-7000 Stuttgart 50(DE)**

(72) Erfinder: **Jesinger, Richard**
**Faissstrasse 11**
**D-7300 Esslingen(DE)**

(74) Vertreter: **Witte, Alexander, Dr.-Ing.**
**Schickhardtstrasse 24**
**D-7000 Stuttgart 1(DE)**

(54) Gebläse zum Umwälzen grosser Gasmengen, insbesondere für Hochleistungs-Laser.

(57) Ein Gebläse dient zum Umwälzen großer Gasmengen, insbesondere für Hochleistungs-Laser nach dem Gastransport-Prinzip. Das Gebläse umfaßt in Gasförderteil (11) und ein Antriebsteil (12), wobei das Gasförderteil (11) einen Radialförderer (16) aufweist, der in einer Verbindungsstrecke zwischen zwei Gaskanälen (18, 20) des Gasförderteils (11) angeordnet ist und das Antriebsteil (12) eine vertikale Welle (33) zum Antreiben des Radialförderers (16) mit hohen Drehzahlen umfaßt. Die Welle (33) ist in einem unterhalb des Radialförderers (16) angeordneten Spiralrillen-Axiallager (85, 86) gelagert. Es sind Mittel vorgesehen, um auf die Welle (33) bei kleinen Drehzahlen eine der Gewichskraft des Antriebsteils (12) entgegenwirkende Kraft auszuüben. Um über einen weiten Drehzahlbereich eine kontrollierte Lagerung in axialer Richtung zu gewährleisten, ist die Welle (33) durch das Ausüben axial gerichteter und sich mit der axialen Auslenkung der Welle (33) ändernden Kräften axial federnd abgestützt. Bei hohen Drehzahlen wird eine nach unten gerichtete und mit der Drehzahl kontinuierlich zunehmende Kraft auf die Welle (33) ausgeübt.

## Gebläse zum Umwälzen großer Gasmengen, insbesondere für Hochleistungs-Laser

Die Erfindung betrifft ein Gebläse zum Umwälzen großer Gasmengen, insbesondere für Hochleistungs-Laser nach dem Gastransport-Prinzip, mit einem Gasförderteil und einem Antriebsteil, wobei das Gasförderteil einen Radialförderer aufweist, der in einer Verbindungsstrecke zwischen zwei Gaskanälen des Gasförderteils angeordnet ist und das Antriebsteil eine vertikale Welle zum Antreiben des Radialförderers mit hohen Drehzahlen umfaßt, wobei die Welle in einem unterhalb des Radialförderers angeordneten Spiralrillen-Axiallager gelagert ist und wobei ferner Mittel vorgesehen sind, um auf die Welle bei kleinen Drehzalen eine der Gewichtskraft des Antriebsteils entgegenwirkende Kraft auszüüben.

Ein derartiges Gebläse ist aus der US-PS 3 951 573 bekannt.

Bei dem bekannten Gebläse ist in der unteren radialen Stirnfläche des freien Endes der Welle eine kegelige Einsenkung vorgesehen. Von der Unterseite und außerhalb des Gehäuses des Gebläses kann mittels einer druckdicht geführten einschraubbaren Stange eine Kugel in Anlage an die kegelige Lagerfläche gebracht werden, so daß die Welle in stillstehendem Zustand von einer Ruheposition axial nach oben abgehoben werden kann, in der die beiden Hälften des Spiralrillen-Axiallagers aufeinander liegen. In dieser leicht angehobenen Stellung kann des Gebläse angefahren werden, bis sich im Spiralrillen-Axiallager ein ausreichender Druck aufgebaut hat, so daß das Eigengewicht der Welle mit aufgesetztem Radialförderer abgefangen werden kann. Sobald dies der Fall ist, kann die mit dem Gewinde versehene Stange wieder nach unten aus dem Gehäuse herausgeschraubt werden und die Kugel hebt von der kegeligen Lagerfläche am unteren Wellenende ab.

Nachteil dieses bekannten Gebläses ist somit, daß nur das Eigengewicht des Antriebsteils starr abgestützt werden kann. Sobald die einschraubbarem Stange mit der Kugel wieder nach unten herausgeschraubt ist, fehlt jede Krafteinwirkung auf das Antriebsteil von außen. Außerdem ist zum Anfahren des Gebläses eine relativ umständliche manuelle Arbeit erforderlich ist, die darüberhinhaus einiges Fingerspitzengefühl verlangt, um die Welle gerade soweit anzuheben, daß ein Anlauf des Gebläses möglich ist und die Gewindestange dann so schnell wieder aus dem Gehäuse herauszudrehen, daß der Hochlauf des Gebläses nicht durch Reibung zwischen Kugel und kegeliger Lagerfläche behindert wird.

Will man die bekannte Anordnung bei Hochleistungs-Lasern mit sehr hohen Ausgangsleistungen einsetzen, ist es erforderlich, das Gas im Laser mit Förderraten von mehreren 1.000 oder 10.000 Kubikmetern pro Stunde umzuwälzen. Hierzu sind Drehzahlen des Radialförderers von einigen 10.000 Umdrehungen pro Minute erforderlich, was andererseits zu Umfangsgeschwindigkeiten am Radialförderer von über 600 Metern pro Sekunde und zu Antriebsleistungen in der Größenordnung von einigen 10 kW führt.

Wie sich im Rahmen der vorliegenden Erfindung gezeigt hat, treten jedoch bei hohen Drehzahlen in Gebläsen der eingangs genannten Art besondere Probleme auf, weil bei zunehmender Drehzahl die Welle mit dem Radialförderer aufgrund des verwendeten Spiralrillen-Axiallagers dazu neigt, nach oben auszuwandern, weil ab einer bestimmten Drehzahl die nach oben wirkenden Saugkräfte die nach unten wirkende Gewichtskraft übersteigen.

Der Erfindung liegt daher die Aufgabe zugrunde, ein Gebläse der eingangs genannten Art dahingehend weiterzubilden, daß über einen weiten Drehzahlbereich eine kontrollierte Lagerung in axialer richtung gewährleistet werden kann.

Diese Aufgabe wird erfindungsgemäß dadurch gelöst, daß die Welle durch das Ausüben axial gerichteter und sich mit der axialen Auslenkung der Welle ändernder Kräfte axial federnd abgestützt ist, wobei bei hohen Drehzahlen eine nach unten gerichtete und mit der Drehzahl kontinuierlich zunehmende Kraft auf die Welle ausgeübt wird.

Die der Erfindung zugrundeliegende Aufgabe wird auf diese Weise vollkommen gelöst, weil je nach vorliegender Drehzahl die axial wirkende Kraft so eingestellt wird, daß sich eine optimale Lagerung ergibt.

So ist nicht nur ein problemloser Anlauf der Welle dadurch möglich, daß im Stillstand oder bei niedrigen Drehzahlen die Welle leicht von ihrem statischen Ruhesitz abgehoben wird, es kann vielmehr auch bei hohen Drehzahlen ein sicherer Lauf gewährleistet werden, weil die eine Auswanderung der Welle mit Radialförderer bewirkenden Saugkräfte durch entgegengesetzt gerichtete Kräfte überwunden werden, gleichzeitig aber durch die federnde axiale Lagerung eine selbsttätige weiche axiale Einstellung der Welle erfolgt.

Bei einer bevorzugten Ausgestaltung der Erfindung ist die Welle axial mittels eines Magnetlagers mit zwei magnetisierbaren Lagerhälften abgestützt, wobei die Magnetisierung mindestens einer Lagerhälfte einstellbar ist.

Diese Maßnahme hat den Vorteil, daß auf elektrische, d.h. leicht einstellbare, schnell regelbare und auch über weite Entfernungen einstellbare Weise je nach vorliegender Drehzahl eine Zug- oder eine Druckkraft in axialer Richtung auf die Welle ausgeübt werden kann.

Bei einer weiteren Ausgestaltung der Erfindung ist die Welle an ihrem vom Radialförderer abgewandten Ende nach Art eines Kolbens dicht geführt und auf ihre radiale Stirnfläche ist mittels einer Druckgasquelle ein Druck einstellbarer Größe ausübbar.

Auch diese Maßnahme hat den Vorteil, daß eine in weiten Bereichen einstellbare Kraft auf die Welle in axialer Richtung ausgeübt werden kann.

Es wurde bereits erwähnt, daß das erfindungsgemäße Gebläse insbesondere für Hochleistungslaser geeignet und vorgesehen ist.

So kann erfindungsgemäß beispielsweise ein Laser, dessen Gas eine Mischung aus 75% Stickstoff und 25% Helium ist, mit einem Gasdruck in der Größenordnung von 100 bis 150 mbar betrieben werden. Bei Durchmessern des Radialförderers zwischen 50 und 500 Millimetern und einer Antriebsleistung zwischen 1 und 50 kW werden bei Drehzahlen über 20.000 Umdrehungen pro Minute Fördervolumina zwischen 800 und 20.000 Kubikmetern pro Stunde erreicht, wobei im Lagerungs- und Schmiersystem ein Druck eingestellt werden kann, der bis zu 10 bar über dem Druck des Lasergases liegen kann.

Die Erfindung gewährleistet in diesem Leistungsbereich, daß optimaler Schnellauf bei den genannten Antriebsleistungen zum Erreichen der genannten Förderraten garantiert werden kann.

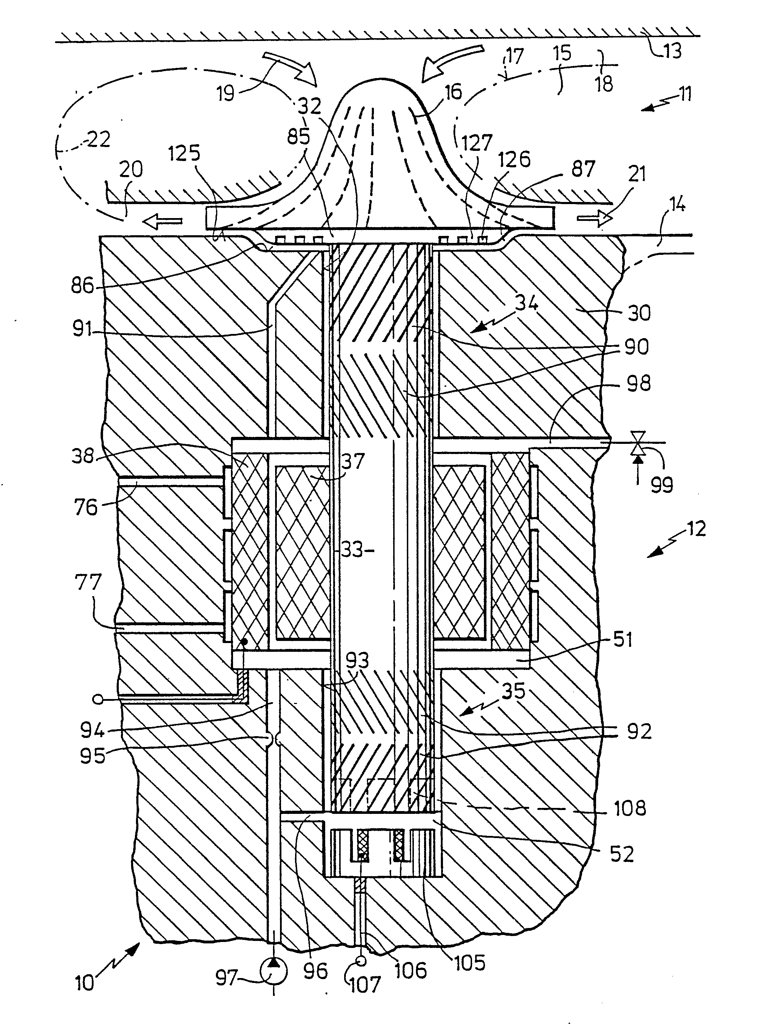

Weitere Vorteile ergeben sich aus der Beschreibung und der beigefügten Zeichnung.

Es versteht sich, daß die vorstehend genannten und die nachfolgend noch geschilderten Merkmale nicht nur in der jeweils angegebenen Kombination sondern auch in anderen Kombinationen oder auch in Alleinstellung verwendet werden können, ohne den Rahmen der vorliegenden Erfindung zu verlassen.

Es versteht sich vor allem, daß der genannte Anwendungsfall bei Lasern nach dem Gastransport-Prinzip nur beispielhaft zu verstehen ist und daß das erfindungsgemäße Gebläse selbstverständlich auch bei zahlreichen anderen Anwendungsfällen eingesetzt werden kann, bei denen im Rahmen industrieller Fertigungsprozesse Gasdurchsätze mit hoher Förderrate benötigt werden.

Ein Ausführungsbeispiele der Erfindung ist in der Zeichnung dargestellt und wird nachfolgend anhand der Beschreibung näher erläutert. Die einzige Figur zeigt
mechanische Einzelheiten eines Antriebes eines Gebläses mit Luftlagern.

In der Fig. bezeichnet 10 als Ganzes ein Ausführungbsbeispiel eines erfindungsgemäßen Gebläses. Das Gebläse 10 wird grob in ein Gasförderteil 11 und ein Antriebsteil 12 unterteilt.

Das Gasförderteil 11 umfaßt alle für die Förderung und Leitung des Gases erforderlichen Elemente. Hierzu sind zwischen einer oberen Begrenzungswand 13 und einer unteren Begrenzungswand 14 Leit- und Trennelemente 15 vorgesehen, die zwischen sich eine Verbindungsstrecke freilassen, in der ein Radialförderer 16 angeordnet ist. Die Oberflächenkontur 17 der Leit- und Trennelemente 15 sind an die entsprechenecde Oberflächenkontur des Radialförderers 16 angepaßt.

Auf diese Weise umfaßt das Gasförderteil 11 einen oberen Gaskanal 18, in dem ein Gas, beispielsweise eine Edelgasmischung, in Richtung der mit 19 bezeichneten Pfeile strömen kann sowie einen unteren Gaskanal 20, in dem das Gas die Richtung von Pfeilen 21 aufweist. Die Gaskanäle 18, 20 treffen sich im Bereich weiterer Umlenkelemente, wie mit einer Bahn 22 in der Fig. angedeutet.

Wird das erfindungsgemäße Gebläse 10 beispielsweise bei einem Hochleistungs-Laser eingesetzt, so kann der obere Gaskanal 18 die Anregungsstrecke sein, während sich zweckmäßigerweise im Verlaufe des unteren Gaskanals 20 ein oder mehrere Wärmetauscher befinden können, um das umgewälzte Gas zu kühlen.

Es versteht sich ferner, daß die eingezeichnete Richtung der Pfeile 19, 21 bei entsprechender Dimensionierung der Schaufeln des Radialförderers 16 auch entgegengesetzt sein kann. Es sei ferner nochmals betont, daß das Anwendungsbeispiel von Lasern nach dem Gastransport-Prinizip im vorliegenden Zusammenhang nur als illustrierendes Beispiel dient und die Erfindung keinesfalls auf diesen Anwendungsfall einschränkt.

Das Antriebsteil 12 umfaßt im wesentlichen ein zylindrisches Gehäuse 30, das an seiner Oberseite in einem Ringflansch ausläuft, der in die untere Begrenzungswand 14 integriert oder an dieser angeschraubt ist.

Im Zentrum des Ringflansches befindet sich eine Öffnung 32, durch die eine Welle 33 ragt, an der der Radialförderer 16 drehstarr angesetzt ist.

Die Welle 33 ist in einem oberen Radiallager 34 und einem unteren Radiallager 35 gehalten, an ihrer Unterseite ist sie mit einer federnden Abstützung gegenüber dem Gehäuse 30 versehen.

Es sei an dieser Stelle auch betont, daß die im vorliegenden Zusammenhang verwendeten Begriffe "oben" und "unten", ebenso wie die Darstellung in den Figuren nur beispielhaft zu verstehen ist. Das erfindungsgemäße Gebläse kann selbstverständlich auch in horizontaler Einbaulage oder nach unten gerichtet eingesetzt werden, ohne daß dies den Rahmen der Erfindung sprengt.

Die Welle 33 ist mit einer Rotorwicklung 37 versehen, die zwischen den Radiallagern 34 und 35 angeordnet ist. Der Rotorwicklung 37 steht eine Statorwicklung 38 gegenüber, die am Gehäuse 30 angeordnet ist. Die Statorwicklung 38 steht mit einem Versorgungsaggregat in Verbindung, das eine elektrische Versorgungsspannung geeigneter Amplitude und Frequenz, insbesondere variable Frequenz, erzeugt. Typischerweise hat das Versorgungsaggregat eine Ausgangsleistung zwischen einem und 50 KW, wobei die Ausgangsfrequenz zwischen 700 und 3000 Hz einstellbar ist.

Der Radialförderer 16 ist an seiner Unterseite 125 mit einem axialen Ansatz 85 versehen, der an eine zugehörige Aussparung 86 in der Oberseite des Gehäuses 30 angepaßt ist. Zwischen dem Ansatz 85 und der Aussparung 86 befindet sich somit ein schmaler ringförmiger Raum 87.

Die Welle 33 ist in ihrem, an den Radialförderer 16 angrenzenden Bereich mit einem oberen Fischgrät-Luftlager 90 versehen, das in ansich bekannter Weise zwei axial versetzte Bereiche - schräger Rillen aufweist. Ein erster Kanal 91 umgeht des obere Fischgrät-Luftlager 90, indem es von der Ecke im Übergang zwischen Zwischenraum 87 und Öffnung 32 wegführt, dann parallel zur Achse der Welle 33 verläuft und - schließlich im zweiten Antriebsraum 50 mündet.

Am unteren Ende der Welle 33 ist ein unteres Fischgrät-Luftlager 92 vorgesehen, das entsprechend dem oberen Fischgrät-Luftlager 90 ausgebildet ist. Das untere Fischgrät-Lager 92 läuft in einer axialen Bohren 93 des Gehäuses 30. Ein zweiter Kanal 94, in dem eine Drossel 95 angeordnet ist, umgeht das untere Fischgrät-Luftlager 92, indem er vom dritten Antriebsraum 51 axial nach unten und dann mit einer Stichleitung 96 zum vierten Antriebsraum 52 führt. Der zweite Kanal 94 setzt sich über den Anschluß der Stichleitung 96 hinaus axial fort und ist dort an eine zweite Druckluftpumpe 97 angeschlossen. Weiterhin führt ein Abströmkanal 98 vom zweiten Antriebsraum 50 über eine einstellbare Drossel 99 ins Freie. Unter "Luft" kann im vorliegenden Zusammenhang auch ein beliebiges Gas oder Gasmgemisch verstanden werden.

Die Bohrung 93 ist als Sackbohrung ausgebildet und nimmt an ihrem Grund einen Elektromagneten 105 auf, der über eine Anschlußleitung 106 mit einer Anschlußbuchse 107 verbunden ist. Gegenüber den Pol-Stirnflächen des Elektromagneten 105 befinden sich magnetisierte Zonen 108 am unteren Ende der Welle 33.

Die Wirkunsweise der Anordnung ist wie folgt:

Die Spiralnuten 126 an der Unterseite 125 des Radialförderers 16 haben bei entsprechenden Drehzahlen der Welle 33 einen doppelten Nutzen. Zum einen dienen sie als Axiallager für die Welle 33 mit anfgesetztem Radialförderer 16, zum anderen dienen sie aber auch als Pumpe für die als Radiallager wirkenden Fischgrät-Luftlager 90 und 92.

Bei einem praktischen Ausführungsbeispiel der Erfindung erhöht das durch die Spiralnuten 126 gebildete Axial-Spiralrillenlager den Druck aus dem Pumpenraum 47 von beispielsweise 100 mbar auf das Doppelte, so daß sich damit auch eine doppelte Tragfähigkeit der Lager ergibt.

Über den ersten Kanal 91 und den zweiten Kanal 94 wird, sofern keine zweite Druckluftpumpe 97 vorgesehen ist, auch das untere Fischgrät-Luftlager 92 von der durch die Spiralnuten 126 gebildeten Pumpe mit Luft versorgt.

Das untere Ende der Welle 33, das in der Bohrung 93 läuft, wirkt wie ein Pumpenkolben.

Man kann daher bei einer Variante der Erfindung durch Anschluß der zweiten Druckluftpumpe 97 den vierten Antriebsraum 52 gesteuert unter Druck setzen und damit die Welle 33 axial be- oder entlasten. Dies ist von besonderer Bedeutung, beim An- oder Auslaufen des Gebläses 10.

Hierzu muß man sich vor Augen führen, daß an der Welle 33 mit aufgesetzten Radialförderer 16 im Betrieb im wesentlichen drei axial wirkende Kräfte angreifen.

Zum einen wirken auf den Radialförderer 16 nach oben gerichtete Saugkräfte ein. Auch die Kraft des Axiallagers, das durch die Spiralnuten 126 gebildet wird, wirkt in axialer Richtung nach oben. Dem entgegengesetzt wirkt die nach unten gerichtete Gewichtskraft.

Bei der Drehzahl Null ist ausschließlich die Gewichtskraft vorhanden. Jedoch beht bereits bei relativ kleinen Drehzahlen die Welle 22 mit Radialförderer 16 infolge der nach oben gerichteten Axiallagerkraft und Saugkraft ab, wobei diese beiden Kräfte bei sich erhöhender Drehzahl mehr und mehr überwiegen.

Es ist daher erforderlich, für höhere Drehzahlen zusätzlich eine nach unter gerichtete Kraft vorzusehen bzw. bei sehr kleinen Drehzahlen zunächst eine nach oben gerichtete Hilfskraft einzustellen, die dann bei höheren Drehzahlen entfällt.

Hierzu kann einmal über die zweite Druckluftpumpe 97 bei kleinen Drehzahlen ein Überdruck im vierten Antriebsraum 52 eingestellt werden, der sich aus einer Durchflußrate und der Drossel 95 ergibt, wobei die Durchflußrate mittels der einstellbaren Drossel 99 vorgewählt werden kann.

Zum anderen kann aber auch bei einer Variante der Erfindung der Elektromagnet 105 zusammen mit den magnetisierten Zonen 108 am unteren Ende der Welle 33 verwendet werden.

Der Elektromagnet 105 ist als Permanentmagnet ausgebildet, der mit einer Erregerwicklung versehen ist, um die Kraft des Permanentmagneten schwächen zu können. Die Polung des Permanentmagneten einerseits und der Zonen 108 andererseits ist dabei so gewählt, daß das untere Ende der Welle 33 von dem Permanentmagneten angezogen wird.

Bei Stillstand der Welle 33 und bei niedrigen Drehzahlen wird die Magnetwicklung erregt, so daß die Kraft des Permanentmagneten kompensiert wird. Die Welle 33 wird somit bei diesen niedrigen Drehzahlen nicht axial nach unten belastet. Erst bei Erreichen höherer Drehzahlen wird die Erregerwicklung entregt und die Anziegungskraft des Permanentmagneten zu den Zonen 108 zieht die Welle 33 nach unten, so daß hierdurch die Axiallagerkraft und die Saugkraft kompensiert werden.

## Ansprüche

1. Gebläse zum Umwälzen großer Gasmengen, insbesondere für Hochleistungs-Laser nach dem Gastransport-Prinzip, mit einem Gasförderteil (11) und einem Antriebsteil (12), wobei das Gasförderteil (11) einen Radialförderer (16) aufweist, der in einer Verbindungsstrecke zwischen zwei Gaskanälen (18, 20) des Gasförderteils (11) angeordnet ist und das Antriebsteil (12) eine vertikale Welle (33) zum Antreiben des Radialförderers (16) mit hohen Drehzahlen umfaßt, wobei die Welle (33) in einem unterhalb des Radialförderers (16) angeordneten Sprialrillen-Axiallager (85, 26) gelagert ist und wobei ferner Mittel vorgesehen sind, um auf die Welle (33) bei kleinen Drehzahlen eine der Gewichtskraft des Antriebsteils (12) entgegenwirkende Kraft auszuüben, dadurch gekennzeichnet, daß die Welle (33) durch das Ausüben axial gerichteter und sich mit der axialen Auslenkung der Welle (33) ändernder Kräfte axial federnd abgestützt ist, wobei bei hohen Drehzahlen eine nach unten gerichtete und mit der Drehzahl kontinuierlich zunehmende Kraft auf die Welle (33) ausgeübt wird.

2. Gebläse nach Anspruch 1, dadurch gekennzeichnet, daß die Welle (33) axial mittels eines Magnetlagers (105, 108) mit zwei magnetisierbaren Lagerhälften abgestützt ist, wobei die Magnetisierung mindestens einer Lagerhälfte einstellbar ist.

3. Gebläse nach Anspruch 1 oder 2, dadurch gekennzeichnet, daß die Welle (33) an ihrem vom Radialförderer (16) abgewandten Ende nach Art eines Kolbens dicht geführt ist und auf ihre radiale Stirnfläche mittels einer Druckgasquelle (97) ein Druck einstellbarer Größe ausübbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 232 546 (FORTUNA) <br> * Figur 2; Ansprüche 1-7; Spalte 2, Zeilen 24-26; Spalte 4, Zeilen 34-38; Spalte 10, Zeilen 12-13,37-41,52-55; Spalte 11, Zeilen 5-14 * <br> ----- | 1-3 | F 04 D 29/04 <br> H 01 S 3/03 |

|  |
|---|
| **RECHERCHIERTE SACHGEBIETE (Int. Cl.4)** |
| F 04 D <br> H 01 S |

Der vorliegende Recherchenbericht wurde für alle Patentansprüche erstellt

| Recherchenort | Abschlußdatum der Recherche | Prüfer |
|---|---|---|
| DEN HAAG | 13-01-1988 | TEERLING J.H. |